# EUROPEAN PATENT APPLICATION

(11) **EP 1 170 499 A1**
(43) Date of publication of application: **09.01.2002**
(21) Application number: 01305654.4
(22) Date of filing: 29.06.2001
(51) Int. Cl.: F02M 35/12, F16L 55/033

(54) **Noise reduction arrangements for air conduits**

(30) Priority: 03.07.2000 GB 0016344
(71) Applicant: TRELLEBORG AB, 231 22 Trelleborg (SE)
(72) Inventor: Bégué, Jérôme, 44300 Nantes (FR)
(74) Representative: Knott, Stephen Gilbert

(57) **Abstract**

A conduit (10) for the air intake supply system of an internal combustion engine is formed by extrusion. Orifices (11) are pierced through the surface of the conduit to allow the passage of air therethrough. This prevents the formation of standing waves in the system, reducing the noise produced thereby. The orifices (11) may be pierced during the extrusion of the conduit (10), and may be in the form of holes or slits. The orifices (11) may be arranged in a regular pattern on the conduit surface, such as in rows, hoops or helices, or in a random pattern, or in a combination of different patterns. The orifices (11) may also be concentrated in specific areas on the conduit surface to improve the acoustic characteristics of the conduit.

## Description

The invention relates to noise reduction arrangements for the conduits in the air supply system of an internal combustion engine.

The cyclical demand for air in an internal combustion engine generates pressure pulses which create standing waves in the air supply circuit. This, in turn, results in the generation of noise at the air intake, in addition to the radiated noise which is generated by the vibrations caused by the circulation of air through the system. The noise generated at the air intake is dominant for frequencies below 500Hz, whereas the radiated noise acts over a large range of frequencies.

Noise at the air intake may be suppressed by acoustic resonators, but these only work for a single frequency.

According to a first aspect of the invention, there is provided a conduit for the passage of a gas, the conduit having orifices through its surface to reduce the emission of noise at predetermined frequencies.

According to a second aspect of the invention, there is provided a method of producing a conduit with orifices through its surface, the orifices being pierced as the conduit is produced.

Noise reducing conduits embodying the invention will now be described, by way of example only, with reference to the accompanying drawings in which:
Figures 1 to 5 are schematic side perspective views of some of the conduits;
Figure 6 is a cross-sectional view of one of the conduits;
Figure 7 shows a side view of an arrangement of connected conduits; and
Figure 8 shows the conduit of Figure 7 in a flexed condition.

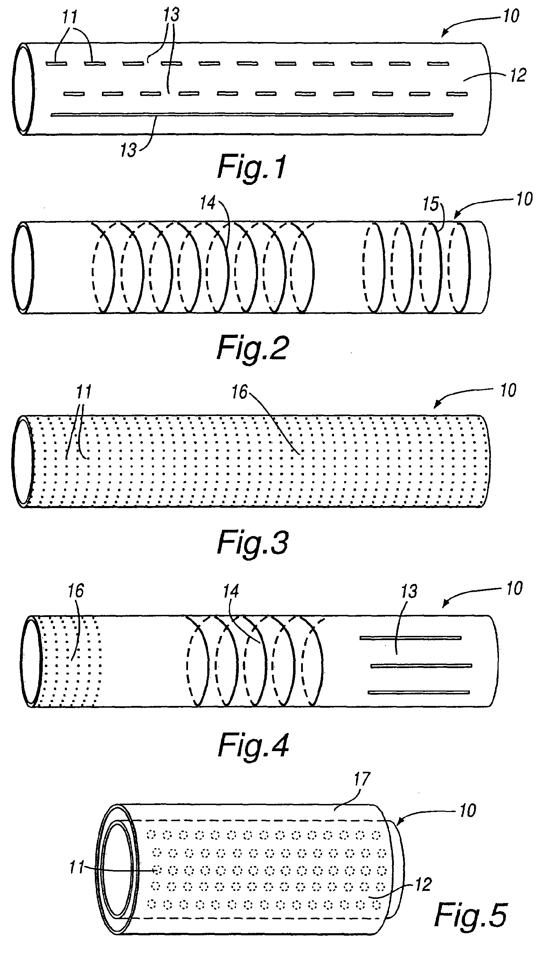

Figures 1 to 4 show a conduit 10 in the form of a pipe and for the air intake system of a internal combustion engine. The conduit has a number of orifices 11 through its surface 12. The orifices 11 may, for example, be holes or slits, and they may vary in size from microns up to a few square centimetres. The orifices 11 may be arranged on generating lines running in rows 13, along the length of the conduit 10, or along a helix 14 or helices on the surface 12 of the conduit 10, or circles 15 around the circumference of the conduit 10, or they may be arranged in a random pattern 16 on the surface 12 of the 10. It is also envisaged to combine different arrangements on the surface 12 of the conduit 10, as is shown in Figure 4, to give a conduit with specific acoustic characteristics.

The acoustic characteristics of the conduit are determined by a number of different factors. These include the orifice size, the number of orifices, the total surface area of the orifices, their form, the spacing between them, the number of generating lines on which they are arranged, and the spacing of those generating lines. These factors may be varied in order to match the acoustic characteristics of the conduit 10 to the engine and vehicle combination that the conduit would be used in, and to suppress the desired frequencies. It is also envisaged to arrange the orifices 11 to be concentrated in specified zones on the surface 12 of the conduit 10, to best suppress the noise within the conduit.

Thus, a conduit is envisaged which can suppress the noise generated at the air intake as effectively as the known porous conduits, but also suppresses the radiated noise more effectively than the known porous conduits.

Figure 5 shows an alternative embodiment of the invention, where the conduit 10 is perforated with orifices 11 through its surface 12, as described above, and which is covered by a tubular acoustic cover member 17 to further suppress the radiated noise.

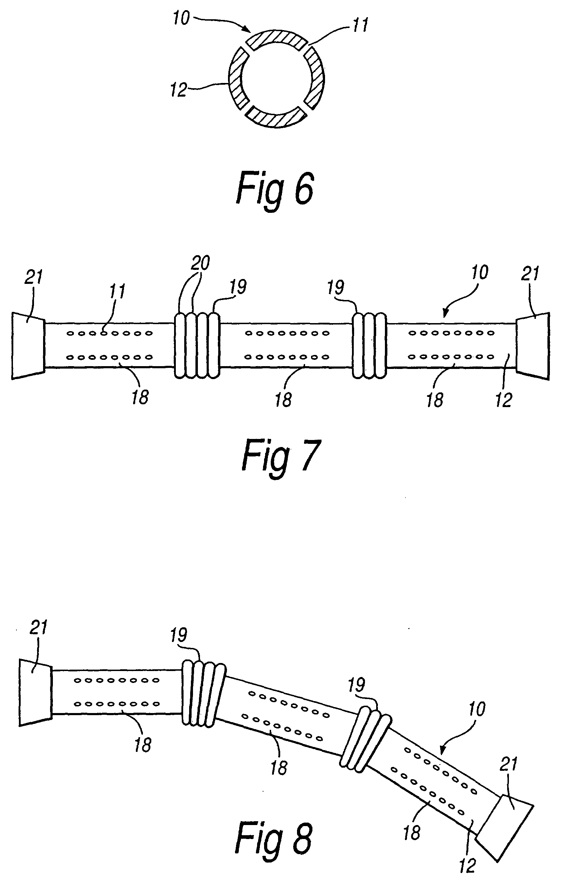

Figure 6 shows the conduit of Figures 1 to 4 in cross-section, illustrating that the orifices 11 perforate the surface 12 of the conduit 10 at points substantially at 45° to the horizontal and vertical axes of the duct. This arrangement is found to give the best acoustic performance.

The conduit 10 may be produced by an extrusion process. The orifices 11 may be pierced during the extrusion of the conduit, either at the point of extrusion or further along the manufacturing line, or they may be pierced subsequent to the manufacture of the conduit.

The orifices 11 may be pierced through the surface 12 of the conduit 10 by any suitable means, such as drilling, punching, sawing, grinding, ultrasound, water-jet or laser, advantageously during the manufacture of the conduit 10 to reduce the total manufacturing time and therefore cost.

Alternatively, the conduit 10 may be produced by an injection moulding process, with the orifices 11 being produced in the conduit 10 or a part of the conduit during the injection moulding process.

The conduit arrangement 10 of Figures 7 and 8 is comprised of three straight sections 18 connected to one another by flexible elbows 19, each elbow comprising a number of bellows turns or elements 20, and two end pieces 21 at respective ends of the conduit arrangement 10 for connection to elements of a vehicle air supply system, such as the air filter and the air intake. Each straight section element 18 may be constructed in the manner shown in Figures 1 to 5. The construction of the elbows 19 from bellows turns or elements 20 allows relative movement of the respective straight sections 8 which are connected by each elbow 19. The degree of relative movement that is possible is determined by the number and the shape of the elements 20. Thus the construction of each elbow 19 is determined by the required final geometry of the conduit in the air intake system.

The conduit arrangement 10 of Figure 7 is produced by an extrusion process as described above. The straight sections 18, the elbows 19 and the end pieces 21 being integral with one another, with its final geometry (as shown in Figure 8) being formed by a moulding process. The conduit arrangement 10 is placed in a jig or former (not shown) and then the conduit arrangement and the jig are placed together in an oven. The relative movement given to the respective straight sections 18 of conduit 10 of Figure 7 by the elbows 19 helps to place the duct 10 into the mould. The orifices 11 are advantageously pierced through the surface 12 of the straight sections 18 of conduit 10 during the extrusion process, in a manner as described above.

## Claims

1. A conduit for the passage of a gas, the conduit (10) having orifices (11) through its surface to reduce the emission of noise at predetermined frequencies.

2. A conduit according to claim 1, in which the predetermined frequencies are below 500 Hz.

3. A conduit according to claim 1 or 2, wherein the conduit (10) is made of rigid material.

4. A conduit according to claim 3, in which the orifices (11) are integrally formed in the rigid material.

5. A conduit according to any preceding claim wherein the orifices (11) are holes.

6. A conduit according to any one of claims 1 to 4, where the orifices (11) are slits.

7. A conduit according to any one of claims 1 to 4, wherein the orifices (11) are both holes and slits.

8. A conduit according to any previous claim, wherein the orifices (11) are disposed at regular intervals along the length of the conduit (10).

9. A conduit according to any previous claim, wherein the orifices (11) are disposed at regular intervals around the circumference of the conduit (10).

10. A conduit according to any one of claims 1 to 7, wherein the orifices (11) are disposed helically on the conduit (10).

11. A conduit according to any one of claims 1 to 7, wherein the orifices (11) are disposed randomly on the conduit (10).

12. A conduit according to any one of claims 1 to 7, wherein the orifices (11) are more concentrated on some areas of the conduit (10) than on other areas.

13. A conduit according to any preceding claim, wherein the conduit (10) is covered by an acoustic cover member (17).

14. A conduit according to any preceding claim, wherein the conduit (10) comprises straight sections (18) connected to one another by flexible connections (19).

15. A method of producing a conduit (10) with orifices (11) through its surface, the orifices (11) being pierced as the conduit (10) is produced.

16. A method according to claim 15, wherein the conduit (10) is extruded.

17. A method according to claim 15, wherein the orifices (11) are pierced downstream from the extrusion of the conduit (10).

18. A method according to claim 16 or claim 17 wherein the conduit (10) comprises straight sections (18) connected by flexible connections (19), the conduit (10) being set in a final, curved configuration by being placed in a jig, the conduit (10) and the jig being placed together in an oven.

19. A method according to claim 15, wherein the conduit (10) is injection moulded.
